# EUROPEAN PATENT SPECIFICATION

(11) **EP 2 186 421 B1**
(45) Date of publication and mention of the grant of the patent: **22.04.2015**
(21) Application number: 09425445.5
(22) Date of filing: 06.11.2009
(51) Int. Cl.: A23G 9/28

(54) **Device for the production of soft ice cream or similar products, with portioning device and portions counting device**
Vorrichtung zur Herstellung einer Softeiscreme oder ähnlicher Produkte mit Portionierungsvorrichtung und Portionszählvorrichtung
Dispositif pour la production de crème glacée molle ou de produits similaires, doté d'un dispositif de portionnement et d'un dispositif de comptage de portions

(30) Priority: 07.11.2008 IT RM20080599
(43) Date of publication of application: 19.05.2010
(73) Proprietor: Elmeco S.r.l., 80025 Casandrino (NA) (IT)
(72) Inventor: Cortese, Umberto, 80025 CASANDRINO (NA) (IT)
(74) Representative: Iannone, Carlo Luigi

(56) References cited:
- US-A- 4 478 355
- US-A- 4 566 612
- US-A1- 2005 173 462
- LIANG J ET AL: "Countable ice cream machine has control circuit board which is respectively connected with display control plate and electronic locking device by data wire" WPI/THOMSON, vol. 2008, no. 22, 13 February 2008 (2008-02-13), XP002539959 -& CN 201 018 877 Y (JIEBIN LIANG [CN]) 13 February 2008 (2008-02-13)

## Description

The present invention concerns a device for the production of soft ice-cream or similar products, with portioning device and portions counting device.

More precisely, the present invention concerns a device that is able to product and dispense the ice cream in a controlled way, by counting the number of dispensed portions and stopping the functioning of the same device when the amount of the beforehand poured-in ice cream is nearly terminated.

The soft ice cream is a dessert ice cream that is automatically dispensed by a machine. It is generally less fat than the classic ice cream and contains a high percentage of air.

There are currently on the market only machines for a large production and distribution of soft ice cream or similar products.

These refrigerators are constituted by a certain number of cooled containers (one for each flavour) which play the function of reservoir chamber and contain the product in its liquid state; each container is put in communication with a lower cooled cylinder wherein the product (at the liquid state) falls by gravity; in the cylinders the product is transformed into semi-solid state product; the cylinders are equipped with a screw auger that has the function of scraping and driving out the product towards outside, where a tap is placed which presents at its end a star-shaped hole that gives to the product its characteristic form.

Currently, many suppliers of food feel the need, in order to produce and distribute to the soft ice cream, to have a small production machine for the transformation, preservation, distribution and portioning of the products that are milk-based and comparable to a soft ice cream.

Such a machine must be furthermore not much expensive, being basically destined to the market of loan for use.

Moreover, it must have the possibility not only to portion, but also to control the number of portions.

Furthermore, the market needs a machine which stops automatically when the set-up number of portions is attained. This element is very important from the point of view of the ice cream suppliers, which tendentially offer these machines with a loan-for-use contract to the end-users, since it allows them to control their actual use of their own product by parties which did not invested on the machine.

The machines of the prior art do not allow to obtain such effects, thus presenting a corresponding number of problems.

The solutions disclosed in patent documents US 4478355A, CN201018877Y and US2005173462A of the prior art present always the problem of a correct portioning. Indeed, in US 4478355A and CN201018877Y the manually operated plunger works substantially as a valve, the counting of the portions being effected by means of timers or similar means, whilst in US2005173462A the authors felt the need of using even two plungers in order to allow the measurement of the portion, thus notably complicating the operation of portioning and dispensing of the product.

It is object of the present invention to provide a device for the production and the controlled dispensing of soft ice cream or similar products, comprising:
- A refrigerator body suitable to treat a pre-determined amount of ice-cream;
- A dispenser of ice-cream;
- Means for the mixing and the forwarding of the ice-cream to the dispenser;
and **characterised in that** the dispenser comprises or is constituted by:
- An only tap having an internal portioning chamber of a pre-determined volume and suitable to be filled completely by the ice-cream so as to contain a pre-determined volume of ice-cream as one portion;
- An only plunger that slides from an upper end to a lower end of the chamber;
- Holding means for holding the ice cream inside the chamber when the plunger is not actuated, said holding means being fixed at the lower end of the chamber corresponding to the lower end of the tap;
- Means for actuating said plunger for the dispensing of the ice-cream, the plunger expelling from the tap, upon single actuation, said pre-determined volume of ice-cream;
the dispenser further presenting means for the detection of the stroke end of said only plunger and the production of a corresponding detection signal that is sent to a management electronic unit.

The actuation of the plunger can be either manual or automatic, depending on the needs.

The holding means are such that they can make the ice cream pass when this is pushed with sufficient pressure but hold it when the pressure is lower than a certain threshold. It is clear that this effect depends also on the materials used and the speed of screw anger and so on, but the skilled person has here the technical concept of using such holding means, and the plunger in a very different way with respect to the prior art, and can routinely determine all the other needed parameters.

Preferably according to the invention, said management electronic unit is adapted to lock the operation of the device when said pre-determined amount of ice-cream has been practically completely dispensed.

Preferably according to the invention:
- Said means for the mixing and the forwarding of the ice-cream to the dispenser are provided on the upper part of said refrigerator body;
- It is further provided a container of said means for the mixing;
- Said tap is integral to said container;
- Said means for actuating the plunger comprise a hand lever provided on said container.

Preferably according to the invention, said lever comprises:
- A horizontal handle with
- Two first parallel arms connected, on one side, transversally to said horizontal handle in a fixed way, and, from the opposite side, to said container rotatably with respect to the horizontal direction,
- Two second parallel arms connected on one side to said two first parallel arms) rotatably with respect to the horizontal direction, on the opposite side being connected one to the other by
- A shaft, to which said plunger is transversally connected in a rotatable way.

Preferably according to the invention, said means for the detection of the stroke end of said plunger are constituted by an appendix of said two first arms, that is disposed in such a way that its free end gets close to said refrigerator body when the plunger gets close to the stroke end, on said free end and the corresponding approaching zone of said refrigerator body being provided two corresponding magnets for the generation of said detection signal.

Preferably according to the invention, said means for detecting the stroke end are constituted by a photocell system.

Preferably according to the invention, the device further comprises a ring nut fixed on the lower end of said tap, said ring nut having a bayonet joint and a star-form hole through which the ice-cream is dispensed.

The invention will be now described by way of illustration and not by way of limitation. It is to be understood that both the foregoing general description and the following detailed description are explanatory and are not restrictive of the invention, as claimed. The detailed description is made with particular reference to the figures of the enclosed drawings, wherein:
- Figure 1 shows an exploded perspective view of the device according to the present invention;
- Figure 2 shows a perspective view of the device according to the present invention, in the closed position (end of dispensing of a portion);
- Figure 3 shows a perspective view of the device according to the present invention, in the open position (beginning of dispensing of a portion).

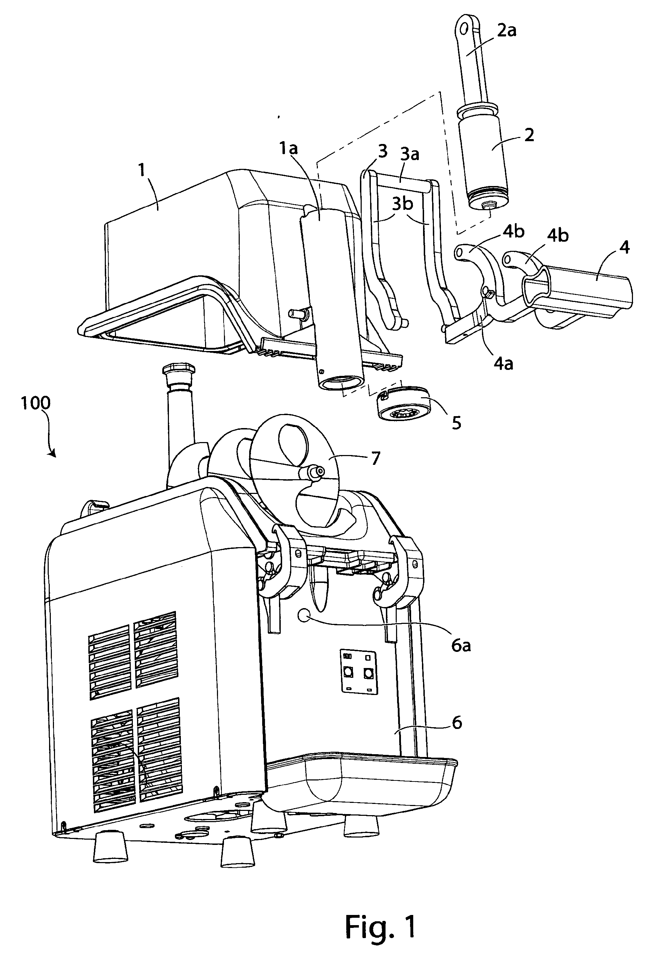

Making reference to figure 1, the machines 100 for the production of water-ice, creams, sorbets and chill drinks are basically constituted by a steel semi-cylinder whereon a screw auger 7 scrapes and pushes by force the product towards the outside; such semi-cylinder is closed in the upper part by a transparent container 1.

In the case of the present invention, it is possible to use the existing steel semi-cylinder, to which a specific transparent container is to be applied, which implements also the function of portioning and counting the amount of portions.

As one sees from figure 1, the container is provided with a tap 1a at its central front end. Such cylinder-shaped tap comprises or define a portioning chamber of pre-determined volume. Such chamber is run through by a plunger 2 with attached packings, operated by a lever 3,4. At the end of the tap, a ring nut 5 with bayonet joint and star-shaped hole is placed.

In appendix 4a of the lever and in the body 6 of the machine two magnets are applied.

The functioning of the machine is as follows:
The product in its liquid state is poured into the refrigerator and transformed in a high-density ice cream.

The product is continuously mixed and pushed towards the tap by means of a screw auger 7.

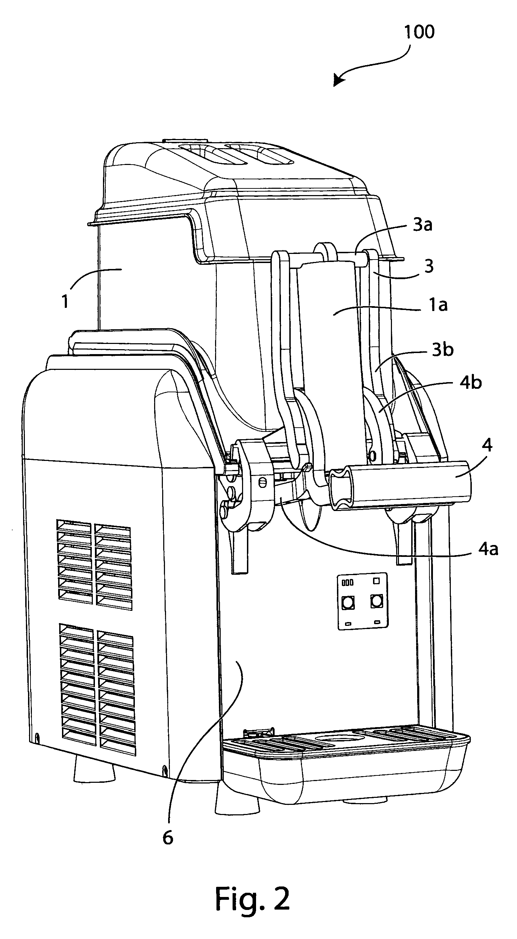

The plunger 2 in the position "closed" (lever 3,4 positioned downwards - figure 2) intercepts the product and does not allow its entry in the cylindrical tap 1a.

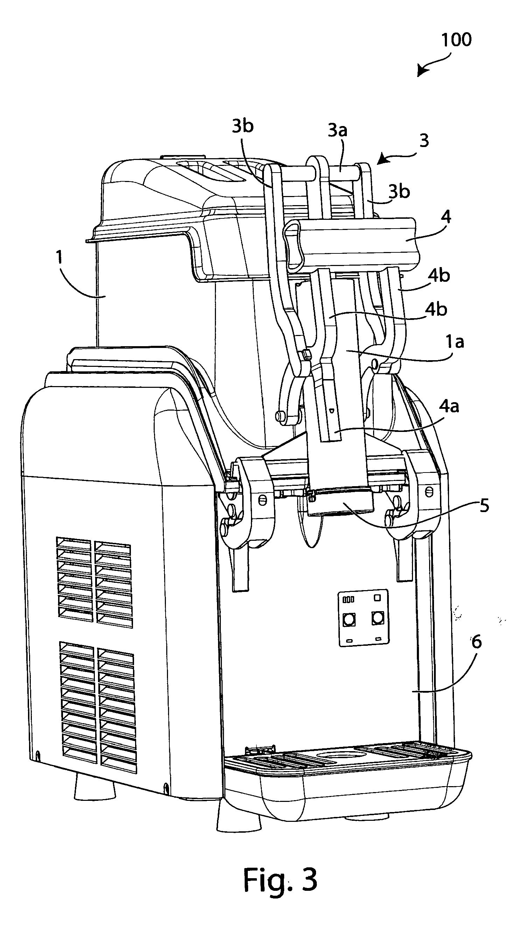

The plunger in the position "open" (lever 3,4 positioned upwards - figure 3) allows instead the product to enter inside the chamber (whose volume determines the quantity of a portion of product). The access occurs through a hole (not shown) inside the container located in the font central part in correspondence to the tap 1 a.

The product is pushed by a screw auger 7 inside the tap and fills it up entirely. The user now with a simple manual act will lower the lever 3, 4, and thanks to the action of the plunger 2 the product will fill a glass, cone or other container placed beforehand below the dispenser.

The tap at its end has a ring nut 5 which presents a star-shaped hole which can have a double function:
- 1. Holding the product inside the chamber, avoiding its discharge by gravity;
- 2. At the moment of the dispensing, imposing to the product, under the thrust of the plunger, the classical form of the soft ice cream.

The opening of the tap corresponds to the lifting of the plunger and allows the product to enter inside the cylinder; moreover, it determines the mutual departing of the two magnets placed in the appendix 4a of the lever and in the body 6 of the machine in corresponding position 6a; such departing is detected by a control software, which counts the amount of openings, therefore of the dispensed portions; the reaching of the amount of the set-up number of portions will block automatically the machine, thus impeding its use; the machine can be made usable again by a reset of the system, which we will be effected locally or remotely.

Although here only the system for detecting the dispensing by magnets is described in the detail, it is clear that any other system which executes the same function, as for example a photocell system, is to be considered comprised in the present invention.

Moreover, the operation lever system of the plunger is only a preferred embodiment of the invention, and the operation can be realised by means of other, equally effective systems (e.g. motorized).

In the device according to the present invention:
- The screw auger 7, suitable to the mixing and the pushing of the ice cream towards the portioning device 1a,2,3,4,4a,5, is provided on the upper part of the refrigerator body 6;
- The whole is closed by a container 1;
- The tap 1 a is integral to said container 1;
- The lever 3, 4, 4a is provided on said container 1.

The lever 3, 4, 4a comprises more in detail:
- A horizontal handle 4 with
- Two first parallel arms 4b connected, on a side, transversely to the horizontal handle 4 in a fixed way, and, on the opposite side, to the container 1 in a rotatable way with respect to the horizontal direction,
- Two second parallel arms 3b connected on a side to the first parallel arms 4b in a rotatable way with respect to the horizontal direction, on the opposite side being fixed with each other by
- A shaft 3, to which the end 2a of the plunger 2 is transversely connected in a rotatable way.

In such a way, by lowering the handle 4, the plunger is pushed in the tap as well, and the product which was already present there is pushed to exit from the ring nut 5.

The preferred embodiments have been above described and some modifications of this invention have been suggested, but it should be understood that those skilled in the art can make variations and changes, without so departing from the related scope of protection, as defined by the following claims.

## Claims

1. Device (100) for the production and the controlled dispensing of soft ice cream or similar products, comprising:
- A refrigerator body (6) suitable to treat a pre-determined amount of ice-cream;
- A dispenser (1 a,2,3,4,4a,5) of ice-cream;
- Means (7) for the mixing and the forwarding of the ice-cream to the dispenser (1a,2,3,4,4a,5);
and **characterised in that** the dispenser (1a,2,3,4,4a,5) comprises or is constituted by:
- An only tap (1a) having an internal portioning chamber of a pre-determined volume and suitable to be filled completely by the ice-cream so as to contain a pre-determined volume of ice-cream as one portion,
- An only plunger (2) that slides from an upper end to a lower end of the chamber;
- Holding means (5) for holding the ice cream inside the chamber when the plunger is not actuated, said holding means (5) being fixed at the lower end of the chamber corresponding to the lower end of the tap (1a);
- Means (3,4,4a) for actuating said plunger (2) for the dispensing of the ice-cream, the plunger expelling from the tap (1 a), upon single actuation, said pre-determined volume of ice-cream;
the dispenser (1a,2,3,4,4a,5) further presenting means for the detection of the stroke end of said only plunger (2) and the production of a corresponding detection signal that is sent to a management electronic unit.

2. Device according to claim 1, **characterised in that** said management electronic unit is adapted to lock the operation of the device when said pre-determined volume of ice-cream has been practically completely dispensed.

3. Device according to claim 1 or 2, **characterised in that**:
- said means (7) for the mixing and the forwarding of the ice-cream to the dispenser (1a,2,3,4,4a,5) are provided on the upper part of said refrigerator body (6);
- it is further provided a container (1) of said means for the mixing;
- said tap (1 a) is integral to said container (1);
- said means (3,4,4a) for actuating the plunger comprise a hand lever (3,4,4a) provided on said container (1).

4. Device according to claim 3, **characterised in that** said lever (3,4,4a) comprises:
- a horizontal handle (4) with
- two first parallel arms (4b) connected, on one side, transversally to said horizontal handle (4) in a fixed way, and, from the opposite side, to said container (1) rotatably with respect to the horizontal direction,
- two second parallel arms (3b) connected on one side to said two first parallel arms (4b) rotatably with respect to the horizontal direction, on the opposite side being connected one to the other by
- a shaft (3a), to which said plunger (2) is transversally connected in a rotatable way.

5. Device according to claim 4, **characterised in that** said means for the detection of the stroke end of said plunger (2) are constituted by an appendix (4a) of said two first arms (4a), that is disposed in such a way that its free end gets close to said refrigerator body (6) when the plunger (2) gets close to the stroke end, on said free end and the corresponding approaching zone (6a) of said refrigerator body (6) being provided two corresponding magnets for the generation of said detection signal.

6. Device according to any claim 1 to 4, **characterised in that** said means for detecting the stroke end are constituted by a photocell system.

7. Device according to any claim 1 to 6, **characterised in that** said holding means is constituted by a ring nut having a bayonet joint and a star-form hole through which the ice-cream is dispensed.

## Patentansprüche

1. Vorrichtung (100) zur Herstellung und kontrollierten Abgabe von Softeiscreme oder ähnlichen Produkten, umfassend:
- einen Kühlaggregatkörper (6), der geeignet ist, eine vorbestimmte Menge von Eiscreme zu behandeln;
- einen Dispenser (la, 2, 3, 4, 4a, 5) von Eiscreme;
- Mittel (7) zum Mischen und Fördern der Eiscreme zu dem Dispenser (la, 2, 3, 4, 4a, 5);
und **dadurch gekennzeichnet, dass** der Dispenser (la, 2, 3, 4, 4a, 5) umfasst oder gebildet ist durch:
- einen einzigen Abgriff (1a), der eine innere Portionierungskammer eines vorbestimmten Volumens aufweist und geeignet ist, vollständig mit der Eiscreme gefüllt zu sein, um so ein vorbestimmtes Volumen der Eiscreme als eine Portion zu enthalten,
- einen einzigen Kolben (2), der von einem oberen Ende zu einem unteren Ende der Kammer gleitet;
- Haltemittel (5) zum Halten der Eiscreme innerhalb der Kammer, wenn der Kolben nicht betätigt ist, wobei das Haltemittel (5) an dem unteren Ende der Kammer entsprechend dem unteren Ende des Abgriffs (1a) befestigt ist;
- Mittel (3, 4, 4a) zur Betätigung des Kolbens (2) zur Abgabe der Eiscreme, wobei der Kolben auf eine einzelne Betätigung hin das vorbestimmte Volumen der Eiscreme aus dem Abgriff (1a) ausstößt; wobei
der Dispenser (la, 2, 3, 4, 4a, 5) ferner Mittel für die Detektion des Taktendes des einzigen Kolbens (2) und die Erzeugung eines entsprechenden Detektionssignals präsentiert, das an eine Führungs-Elektronikeinheit gesendet wird.

2. Vorrichtung gemäß Anspruch 1, **dadurch gekennzeichnet, dass** die Führungs-Elektronikeinheit angepasst ist, den Betrieb der Vorrichtung zu blockieren, wenn das vorbestimmte Volumen der Eiscreme praktisch vollständig abgegeben worden ist.

3. Vorrichtung gemäß Anspruch 1 oder 2, **dadurch gekennzeichnet, dass**:
- die Mittel (7) zum Mischen und Fördern der Eiscreme zum Dispenser (la, 2, 3, 4, 4a, 5) auf dem oberen Teil des Kühlaggregatkörpers (6) bereitgestellt sind; wobei
- ferner ein Container (1) der Mittel zum Mischen bereitgestellt ist;
- der Abgriff (1a) integral mit dem Container (1) ist;
- die Mittel (3, 4, 4a) zur Betätigung des Kolbens einen Handhebel (3, 4, 4a) umfassen, der an dem Container (1) bereitgestellt ist.

4. Vorrichtung gemäß Anspruch 3, **dadurch gekennzeichnet, dass** der Hebel (3, 4, 4a) umfasst:
- einen horizontalen Handgriff (4) mit
- zwei ersten parallelen Armen (4b), die auf einer Seite in einer festen Weise transversal mit dem horizontalen Handgriff (4) verbunden sind und von der entgegengesetzten Seite in Bezug auf die horizontale Richtung mit dem Container (1) drehbar verbunden sind,
- zwei zweite parallele Arme (3b), die auf einer Seite in Bezug auf die horizontale Richtung mit den zwei ersten parallelen Armen (4b) drehbar verbunden sind und auf der entgegengesetzten Seite miteinander verbunden sind durch
- einen Schaft (3a), mit dem der Kolben (2) in einer drehbaren Weise transversal verbunden ist.

5. Vorrichtung gemäß Anspruch 4, **dadurch gekennzeichnet, dass** die Mittel zur Detektion des Taktendes des Kolbens (2) durch einen Fortsatz (4a) der zwei ersten Arme (4a) gebildet sind, der derart angeordnet ist, dass sein freies Ende nahe zu dem Kühlaggregatkörper (6) gelangt, wenn der Kolben (2) nahe zu dem Taktende gelangt, wobei auf dem freien Ende und der entsprechenden Annäherungszone (6a) des Kühlaggregatkörpers (6) zwei entsprechende Magnete für die Erzeugung des Detektionssignals bereitgestellt sind.

6. Vorrichtung gemäß einem der Ansprüche 1 bis 4, **dadurch gekennzeichnet, dass** die Mittel zur Detektion des Taktendes durch ein Photozellen-System gebildet werden.

7. Vorrichtung gemäß einem der Ansprüche 1 bis 6, **dadurch gekennzeichnet, dass** das Haltemittel durch eine Ringnut gebildet ist, die eine Bayonettverbindung und eine Sternförmige Öffnung aufweist, durch die die Eiscreme abgegeben wird.

## Revendications

1. Dispositif (100) pour la production et la distribution contrôlée de crème glacée molle ou de produits similaires, comprenant :
- un corps de réfrigérateur (6) approprié pour traiter une quantité prédéterminée de crème glacée ;
- un distributeur (1a, 2, 3, 4, 4a, 5) de crème glacée ;
- des moyens (7) pour le mélange et l'avance de la crème glacée vers le distributeur (1a, 2, 3, 4, 4a, 5) ;
et **caractérisé en ce que** le distributeur (1a, 2, 3, 4, 4a, 5) comprend ou est constitué par :
- un robinet unique (1a) comportant une chambre de réalisation de portion interne d'un volume prédéterminé et appropriée pour être complètement remplie par la crème glacée de façon à contenir un volume prédéterminé de crème glacée sous la forme d'une portion ;
- un plongeur unique (2) qui coulisse d'une extrémité supérieure à une extrémité inférieure de la chambre ;
- des moyens de maintien (5) pour maintenir la crème glacée à l'intérieur de la chambre lorsque le plongeur n'est pas actionné, lesdits moyens de maintien (5) étant fixés à l'extrémité inférieure de la chambre en correspondance avec l'extrémité inférieure du robinet (1 a) ;
- des moyens (3, 4, 4a) pour actionner ledit plongeur (2) pour la distribution de la crème glacée, le plongeur expulsant à partir du robinet (1a), lors d'un actionnement unique, ledit volume prédéterminé de crème glacée ;
le distributeur (1 a, 2, 3, 4, 4a, 5) présentant de plus des moyens pour la détection de la fin de course dudit plongeur unique (2) et la production d'un signal de détection correspondant, qui est envoyé à une unité électronique de gestion.

2. Dispositif selon la revendication 1, **caractérisé en ce que** ladite unité électronique de gestion est adaptée de façon à verrouiller le fonctionnement du dispositif lorsque ledit volume prédéterminé de crème glacée a été pratiquement complètement distribué.

3. Dispositif selon la revendication 1 ou 2, **caractérisé en ce que** :
- lesdits moyens (7) pour le mélange et l'avance de la crème glacée vers le distributeur (1 a, 2, 3, 4, 4a, 5) sont disposés sur la partie supérieure dudit corps de réfrigérateur (6) ;
- il est de plus disposé un récipient (1) desdits moyens pour le mélange ;
- ledit robinet (1 a) est intégré audit récipient (1) ;
- lesdits moyens (3, 4, 4a) pour actionner le plongeur comprennent un levier à main (3, 4, 4a) disposé sur ledit récipient (1).

4. Dispositif selon la revendication 3, **caractérisé en ce que** ledit levier (3, 4, 4a) comprend :
- une poignée horizontale (4) avec :
- deux premiers bras parallèles (4b) reliés, sur un côté, de façon transversale à ladite poignée horizontale (4) d'une façon fixe, et, à partir du côté opposé, audit récipient (1) de façon à pouvoir tourner par rapport à la direction horizontale,
- deux deuxièmes bras parallèles (3b) reliés sur un côté auxdits deux premiers bras parallèles (4b) de façon à pouvoir tourner par rapport à la direction horizontale, et, sur le côté opposé, étant reliés l'un à l'autre par :
- un arbre (3a), auquel ledit plongeur (2) est relié transversalement de façon à pouvoir tourner.

5. Dispositif selon la revendication 4, **caractérisé en ce que** lesdits moyens pour la détection de la fin de course dudit plongeur (2) sont constitués par un appendice (4a) desdits deux premiers bras (4a), celui-ci étant disposé de telle façon que son extrémité libre s'approche dudit corps de réfrigérateur (6) lorsque le plongeur (2) s'approche de la fin de course, deux aimants correspondants pour la génération dudit signal de détection étant disposés sur ladite extrémité libre et sur la zone d'approche correspondante (6a) dudit corps de réfrigérateur (6).

6. Dispositif selon l'une quelconque des revendications 1 à 4, **caractérisé en ce que** lesdits moyens pour détecter la fin de course sont constitués par un système de cellule photoélectrique.

7. Dispositif selon l'une quelconque des revendications 1 à 6, **caractérisé en ce que** lesdits moyens de maintien sont constitués par un écrou annulaire comportant un raccord à baïonnette et un trou en forme d'étoile à travers lequel la crème glacée est distribuée.
